Europäisches Patentamt

(19) European Patent Office

Office européen des brevets

(11) Numéro de publication: **0 048 296**
**A1**

## (12) DEMANDE DE BREVET EUROPEEN

(21) Numéro de dépôt: **80105678.9**

(22) Date de dépôt: **22.09.80**

(51) Int. Cl.³: **G 01 C 17/04**
**G 04 B 47/06**

(43) Date de publication de la demande:
**31.03.82 Bulletin 82/13**

(84) Etats contractants désignés:
**DE FR GB IT**

(71) Demandeur: **NOVISTAR S.A.**
**Case Postale 652**
**82, Boulevard des Endroits CH-2301 La Chaux-de-Fonds,**
**Neuchâtel(CH)**

(72) Inventeur: **Erard, Raoul Henri**
**82, Boulevard des Endroits**
**CH-2301 La Chaux-de-Fonds, Neuchâtel(CH)**

(74) Mandataire: **Micheli, Michel Pierre et al,**
**MICHELI & CIE 118, Rue du Rhône Case Postale 47**
**CH-1211 Geneve 6(CH)**

(54) **Dispositif indiquant pour un lieu déterminé la direction d'un grand cercle terrestre passant par la Mecque.**

(57) Dispositif comprenant une image (2.1) fixe, symbolique. de la Mecque, susceptible d'être visible lorsqu'elle est orientée (sur un arc de grand cercle) en direction de la Mecque, alors qu'elle est plus ou moins obscurcie lorsqu'elle est orientée dans une autre direction. Il comporte un système composé de deux filtres polarisés, l'un (8) orienté manuellement en fonction du lieu, l'autre (9) orienté magnétiquement par le champ magnétique terrestre.

FIG.4

EP 0 048 296 A1

1.

## Dispositif indiquant pour un lieu déterminé la direction d'un grand cercle terrestre passant par la Mecque

On connaît des montres permettant de déterminer, pour un lieu donné de la terre, la direction d'un arc de grand cercle terrestre passant par la Mecque. Toutes ces montres comprennent un organe, réglable manuellement, en fonction du lieu donné et d'une aiguille de boussole, de telle sorte que, pour une position relative précise, et seulement pour celle-ci, une flèche solidaire de l'organe indique la direction recherchée.

On connaît d'autre part des montres dans lesquelles on utilise un système optique polarisé, composé de deux disques superposés, afin de faire apparaître et disparaître périodiquement une image, et cela uniquement dans le but de créer un effet visuel ou décoratif particulier.

Le dispositif objet de l'invention se différencie des montres connues par le fait qu'il utilise un système optique polarisé afin de faire apparaître une image symbolique, avec le maximum de clarté, seulement lorsque la montre est alignée, exactement sur la direction recherchée, un repère permettant de préciser la direction.

Le fait de régler un organe manuellement sélectionnant le lieu donné, puis de tourner la montre autour de l'axe des aiguilles jusqu'à ce que l'image apparaisse avec le maximum de clarté, simplifie non seulement les réglages et la manipulation, mais évite toute erreur d'interprétation ou d'orientation.

Le dessin annexé représente à titre d'exemple deux formes d'exécution, non exclusives, du dispositif selon l'invention.

Les figures 1 et 2 représentent respectivement, latéralement et en coupe partielle et, en plan, une montre munie du dispositif selon l'invention avec son axe de référence orienté dans la direction d'un arc de grand cercle passant par la Mecque.

La figure 3 représente, en plan, la même montre lorsque son axe de référence est orienté dans une autre direction.

Les figures 4 et 5 représentent respectivement en coupe et en plan une seconde forme d'exécution du dispositif selon l'invention.

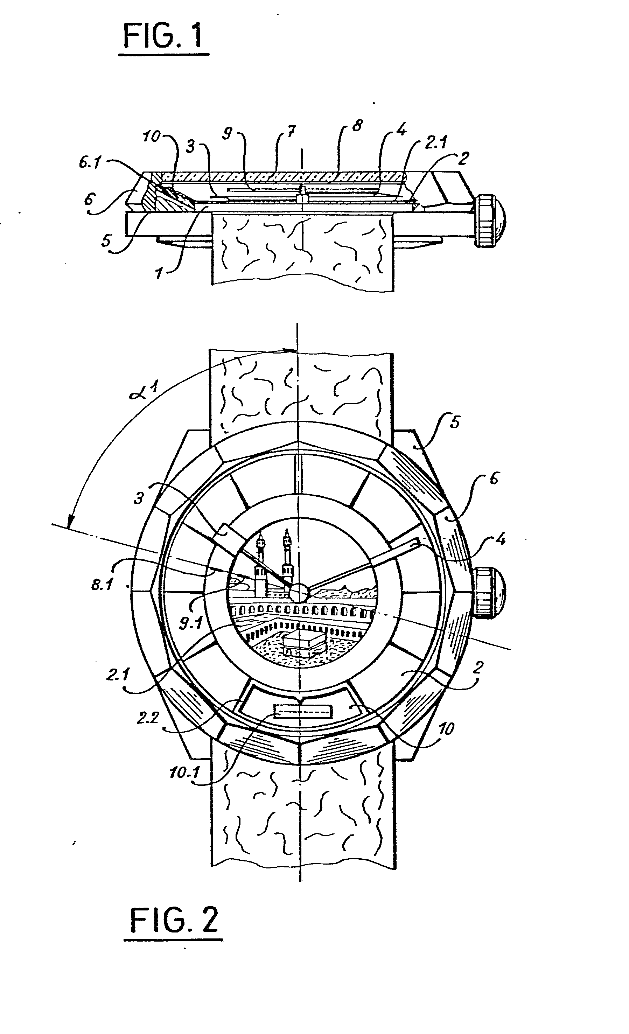

Sur la figure 1 on remarque le mouvement 1 solidaire de la carrure 5 et portant le cadran 2 au centre duquel se trouve l'image 2.1 représentant symboliquement la Mecque. Au dessus du cadran pivotent, concentriquement au mouvement, l'aiguille des heures 3 et l'aiguille des minutes 4. Un disque mobile 9 constitué par un filtre polarisé est pivoté librement au-dessus des aiguilles. Ce filtre est orienté en fonction de l'axe magnétique terrestre par un élément magnétique bipôle (nord-sud) solidaire du disque et orienté, dans cet exemple, parallèlement à l'axe de polarisation. Le système de pivotement de ce disque polarisé est logé à l'intérieur d'un tube chassé dans la platine du mouvement et autour duquel pivotent les mobiles supportant l'aiguillage.

Une lunette 6 porte une glace 7 et au-dessous de celle-ci un filtre polarisé supérieur 8 (de même diamètre). Cette lunette est montée sur la carrure de la boîte, de façon à pouvoir être orientée manuellement angulairement par rapport à celle-ci et donc par rapport à l'axe vertical de l'image (axe six heures-midi du cadran) en entraînant par un tenon de lunette 6.1 une couronne de référence 10 logée sur le pourtour du mouvement entre le cadran et la carrure et dont seule une partie de la face supérieure apparaît dans un guichet du cadran.

Lorsque la montre a son cadran approximativement horizontal et orienté en direction de la Mecque soit avec l'axe six heures-midi confondu avec un arc de grand cercle terrestre passant par la Mecque (figure 2), la lunette 6 et la couronne de référence 10 sont orientées à l'aide d'un repère 10.1 décalqué sur la couronne. Ce repère correspond ou est associé au lieu où se trouve l'observateur, et lorsqu'il est placé en regard d'un index formé par le pourtour du guichet 2.2 l'axe de polarisation du filtre polarisé supérieur signalé par un repère du filtre supérieur 8.1 forme un angle $\alpha 1$ avec l'axe de l'image 2.1, et l'axe longitudinal de la carrure 5 correspondant à l'axe de déroulement du bracelet. Cet angle $\alpha 1$ est déterminé par l'angle au sommet de l'intersection, au lieu où se trouve l'observateur, d'un arc de grand cercle terrestre passant par le lieu et la Mecque et d'un arc du méridien du lieu.

D'autre part, le disque mobile polarisé 9 orienté magnétiquement porte un repère du "Nord" 9.1 sur lequel sont alignés l'axe de polarisation du filtre et l'axe d'aimantation "Nord-Sud" de telle sorte que lorsque ce repère du "Nord" est également aligné sur l'ange $\alpha 1$, soit en regard du repère du filtre supérieur, les axes de polarisation des deux filtres sont parallèles, ce qui permet de voir l'image avec le maximum de clarté, les aiguilles des heures 3 et des minutes 4 étant façonnées de façon à apparaître très finement au-dessus de l'image (ces aiguilles pourraient être supportées par une partie centrale transparente).

Le disque mobile est façonné dans une matière transparente polarisée montée sur un dispositif de pivotement suffisamment sensible pour permettre l'orientation du disque par le champ magnétique terrestre.

L'élément magnétique solidaire du disque peut être constitué soit par une aiguille de boussole, soit par une couronne en matière magnétique constituant un cadre sur le pourtour du disque (ayant éventuellement deux protubérances Nord-Sud diamétralement opposées) soit par un noyau magnétique bi-polaire central, soit par une matière magnétique déposée par décalque à l'aide d'un liant sur une partie du disque.

Indépendamment de la forme décrite, le filtre polarisé supérieur pourrait être supporté par un rehaut à l'intérieur de la boîte, solidaire de la couronne et commandé par une couronne indépendante ou par tout autre système connu afin qu'il se déplace indépendamment de la glace.

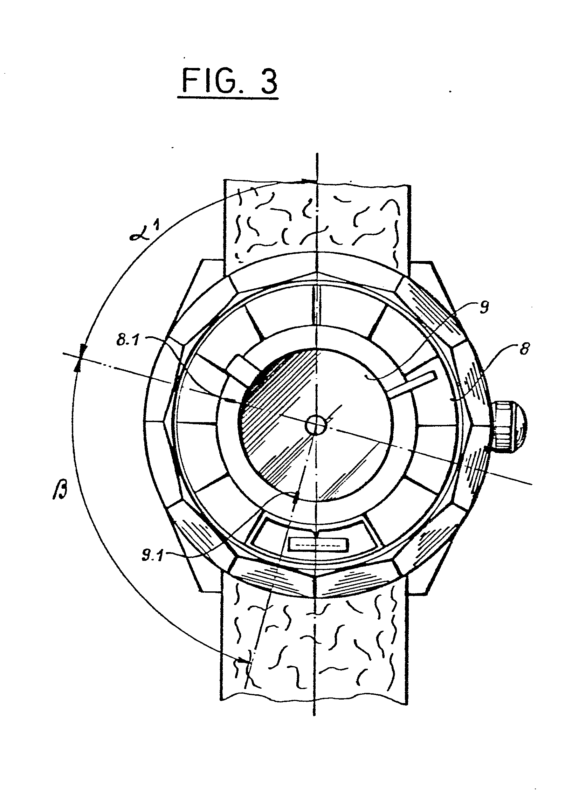

Sur la figure 3 on remarque la montre dans une position telle que le repère du Nord 9.1 fait un angle $\beta$ de 90° avec le repère du filtre supérieur 8.1 de telle sorte que les axes de polarisation des disques polarisés 8.9 sont perpendiculaires, et rendent le système optique polarisé opaque, l'image étant invisible, celle-ci réapparaissant progressivement lorsque l'on déplace la montre en rotation afin de réduire progressivement l'angle $\beta$.

Les repères du filtre supérieur 8 et du Nord 9.1 permettent de régler avec précision la position mais également de contrôler la bonne direction puisque celle-ci correspond uniquement à celle indiquée par l'image lorsque les repères sont en regard l'un de l'autre (l'image pouvant également être visible lorsque les repères sont diamètralement opposés).

Il convient de préciser que l'objet de l'invention peut être modifié puisqu'il est possible de disposer l'image et les filtres polarisés à différents endroits, indépendamment de la position des aiguilles.

Les indications figurant sur la couronne (repères) peuvent être des noms de lieux, des caractéristiques géographiques particulières telles que références de lignes terrestres passant par des lieux d'où la Mecque se situe à un angle commun par rapport au nord, ou toute autre référence à interpréter par rapport à une tabelle, un graphique, susceptibles d'être reproduits au moins partiellement sur une partie de la montre ou de son bracelet.

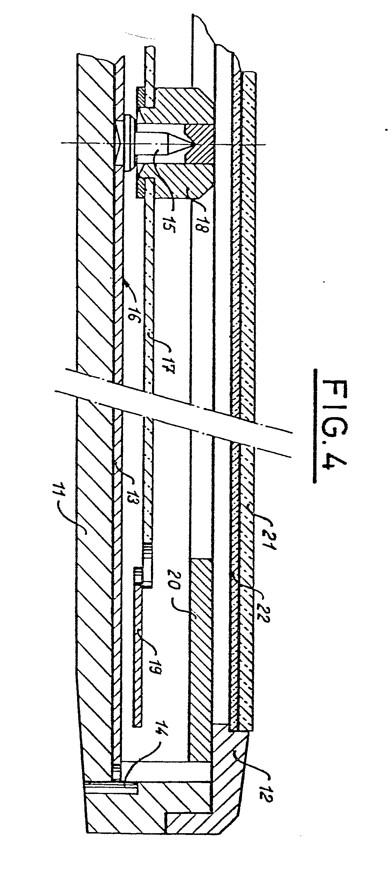

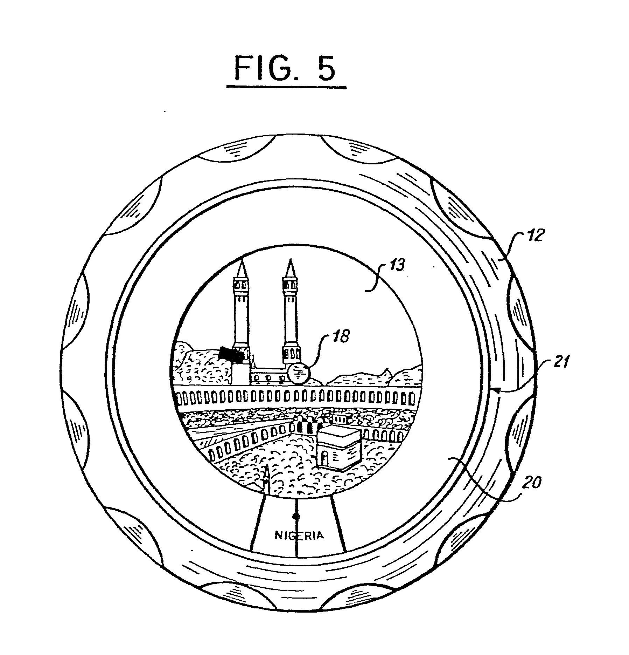

La seconde forme d'exécution illustrée aux figures 4 et 5 est constituée par un appareil qui n'est pas combiné avec un indicateur horaire.

Cet appareil comporte une boîte 11 sur le bord de laquelle est fixée une lunette 12 par encliquetage. Cette lunette 12 est mobile et peut être déplacée manuellement angulairement par rapport à la boîte 11.

Le fond de la boîte 11 est recouvert d'un cadran 13 dont la position angulaire par rapport à la boîte est déterminée par un ergot 14. Ce cadran porte un axe 15 en son centre. La face supérieure du cadran porte une image 16 représentant par exemple la grande mosquée de la Mecque.

Un disque 17 constituant le filtre inférieur polarisé, est fixé sur un pivot 18 reposant sur l'extrémité de l'axe 15. Ce disque 17 peut donc tourner librement par rapport à l'axe et donc à la boîte 11 et au cadran 13. Un anneau magnétique 19 est collé sur le disque 17 de telle sorte que son axe de magnétisation Nord-Sud soit confondu avec l'axe de polarisation du filtre optique.

Un rehaut 20, dont la position angulaire est fixée par rapport à la boîte, délimite une couronne externe entourant le disque 17. Cette zone annulaire comporte une portion claire de faible dimension et une partie foncée représentant la plus grande partie de sa circonférence.

La lunette 12 porte une glace 21 sous laquelle est collé un filtre optique polarisé 22. La glace ou le filtre porte dans sa partie périphérique des repères formés par des noms de villes ou de lieux qui sont disposés de telle façon que lorsqu'un lieu est superposé à la partie claire du rehaut et qu'il devient donc lisible l'axe de polarisation du filtre supérieur 22 forme un angle α avec l'axe de l'image 16 correspondant à l'angle au sommet de l'intersection, au lieu ou se trouve l'observateur d'un arc de grand cercle passant par la Mecque et ledit lieu et d'un arc du méridien du lieu.

Ainsi, l'utilisateur place l'indication du lieu où il se trouve dans la zone blanche du rehaut puis tourne le dispositif entier jusqu'à ce que l'image apparaîsse. En regardant alors celle-ci à l'endroit l'appareil indique la direction du grand cercle terrestre passant par le lieu déterminé et la Mecque. Un repère supplémentaire porté par le disque 17 peut être prévu pour indiquer, lorsqu'il est en regard d'un repère porté par la glace ou le rehaut la direction de la Mecque.

## REVENDICATIONS

1. Dispositif destiné à indiquer, pour un lieu déterminé, la direction d'un grand cercle terrestre passant par la Mecque, caractérisé par le fait qu'il comprend, au-dessus d'une image symbolique fixe orientée selon un axe de référence déterminé par rapport à un boîtier, deux filtres polarisés, approximativement parallèles, l'un des filtres étant solidaire d'un organe de réglage manuel comprenant des repères, dont l'un correspond au lieu déterminé, afin de régler l'orientation de son axe de polarisation par rapport à l'axe de référence, l'autre des filtres pivotant librement et comportant un élément magnétique positionnant constamment son axe de polarisation en fonction de l'axe magnétique terrestre, le tout de telle sorte que les axes de polarisation des deux filtres soient parallèles et permettent de voir l'image seulement lorsque l'axe de référence est orienté selon l'arc de grand cercle passant par la Mecque, alors que l'image est progressivement obsurcie pour finalement disparaître, lorsque l'on éloigne angulairement l'axe de référence de l'arc de grand cercle.

2. Dispositif selon la revendication 1, caractérisé par le fait qu'il comporte un repère complémentaire permettant de contrôler que l'image se présente dans la bonne direction, c'est-à-dire qu'elle soit à l'endroit lorsque d'un lieu déterminé on regarde la Mecque.

3. Dispositif selon la revendication 1 ou la revendication 2, caractérisé par le fait qu'il est combiné avec un mouvement d'horlogerie.

4. Dispositif selon la revendication 3, caractérisé par le fait que l'image est portée par le cadran d'une montre bracelet ou de poche.

## FIG. 1

## FIG. 2

-214-

## FIG. 3

FIG.4

0048296

— 4/4 —

## FIG. 5

NIGERIA

**0048296**

Numéro de la demande

**Office européen des brevets**

**RAPPORT DE RECHERCHE EUROPEENNE**

EP 80 10 5678

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | CH - A - 328 782 (M. DUMOULIN)  <br>   * Page 1, ligne 46 - page 2, ligne 41 * | 1,3,4 | G 01 C 17/04 <br> G 04 B 47/06 |
| | -- | | |
| | FR - A - 2 304 896 (J. ROUSSEAU)  <br>   * Revendications 1,2,3 * | 1 | |
| | -- | | |
| | FR - A - 1 054 674 (R. PRETOT)  <br>   * Page 1, colonne de droite; page 2, colonne de gauche * | 1 | DOMAINES TECHNIQUES RECHERCHES (Int. Cl.³) |
| | -- | | G 01 C 17/04 <br>         17/10 |
| | US - A - 3 907 431 (J. McDOUGAL)  <br>   * Résumé; colonne 2, lignes 2-39 * | 1 |         17/12 <br>         17/14 <br>         17/26 <br> G 04 B 47/06 |
| | -- | |         45/00 |
| | US - A - 3 786 571 (L. KELMAN)  <br>   * Colonne 2, lignes 39-66 * | 1 | |
| | -- | | |
| A | CH - A - 465 507 (AGON)  <br>   * Page 1, 1ère colonne, lignes 26-37 * | 1 | CATEGORIE DES DOCUMENTS CITES |
| | ---- | | X. particulierement pertinent <br> A. arrière-plan technologique <br> O: divulgation non-ecrite <br> P. document intercalaire <br> T: théorie ou principe à la base de l'invention <br> E: demande faisant interference <br> D: document cité dans la demande <br> L: document cité pour d'autres raisons |
| | | | &. membre de la même famille. document correspondant |

Le present rapport de recherche a ete établi pour toutes les revendications

| Lieu de la recherche | Date d'achevement de la recherche | Examinateur |
|---|---|---|
| La Haye | 11-06-1981 | DE BUYZER |

OEB Form 1503.1   06.78